## (19) Europäisches Patentamt
### European Patent Office
### Office européen des brevets

(11) **EP 0 627 834 B1**

(12) **EUROPÄISCHE PATENTSCHRIFT**

(45) Veröffentlichungstag und Bekanntmachung des Hinweises auf die Patenterteilung:
**17.12.2003 Patentblatt 2003/51**

(51) Int Cl.⁷: **H04L 27/22**, H04H 1/00

(21) Anmeldenummer: **94106033.7**

(22) Anmeldetag: **19.04.1994**

(54) **Demodulator für RDS-Signale**

Demodulator for RDS signals

Démodulateur pour signaux "RDS"

(84) Benannte Vertragsstaaten:
**AT DE ES FR GB IT PT**

(30) Priorität: **04.06.1993 DE 4318642**

(43) Veröffentlichungstag der Anmeldung:
**07.12.1994 Patentblatt 1994/49**

(73) Patentinhaber: **ROBERT BOSCH GMBH**
**70442 Stuttgart (DE)**

(72) Erfinder:
- **Hegeler, Wilhelm**
  **D-31134 Hildesheim (DE)**
- **Kässer, Jürgen, Dr.**
  **D-31199 Diekholzen (DE)**
- **Nyenhuis, Detlev**
  **D-31079 Sibbesse (DE)**
- **Vogt, Lothar, Dr.**
  **D-31249 Hohenhameln (DE)**

(56) Entgegenhaltungen:
**EP-A- 0 195 989          DE-A- 4 029 583**

# Beschreibung

Die Erfindung betrifft eine Schaltungsanordnung für einen Demodulator eines Radio-Daten-Signals in einem Rundfunkempfänger, wobei die Übertragung des Radio-Daten-Signals durch Phasenumtastung eines unterdrückten Hilfssignals innerhalb eines Multiplexsignals erfolgt.

Zur Demodulatation von Radio-Daten-Signalen sind bereits verschiedene Schaltungen bekanntgeworden, die Analogsignale verarbeiten.

Aufgabe der vorliegenden Erfindung ist es, die Demodulation eines Radio-Daten-Signals, das vorzugsweise in digitaler Form vorliegt, mit Mitteln der digitalen Schaltungstechnik in vorteilhafter Weise zu ermöglichen.

Diese Aufgabe wird bei der o.a. Schaltungsanordnung dadurch gelöst, daß das Multiplexsignal in digitaler Form nach einer Bandpaßfilterung mit einem aus einem im Rundfunkempfänger erzeugten Abtasttakt gewonnenen Referenzträger in zwei um 90° gegeneinander verschobenen Phasenlagen in das Basisband gemischt wird, wobei ein erstes und ein zweites Mischsignal entstehen, daß ein erstes und ein zweites Hilfssignal mit einem sinus- und einem cosinusförmigen Verlauf erzeugt werden, daß das erste Mischsignal mit dem ersten Hilfssignal und das zweite Mischsignal mit dem zweiten Hilfssignal multipliziert wird, wobei die Ergebnisse dieser Multiplikationen unter Bildung eines ersten Ausgangssignals addiert werden, daß das erste Mischsignal mit dem zweiten Hilfssignal und das zweite Mischsignal mit dem ersten Hilfssignal multipliziert wird, wobei die Ergebnisse unter Bildung eines zweiten Ausgangssignals subtrahiert werden und daß die Phasenlage der Hilfssignale derart gesteuert wird, daß das erste Ausgangssignal dem in das Basisband herabgesetzten Radio-Daten-Signal entspricht.

Ein wesentlicher Vorteil der erfindungsgemäßen Schaltungsanordnung besteht darin, daß der Referenzträger mit dem für die digitale Verarbeitung erzeugten Abtasttakt verkoppelt ist. Daraus ergeben sich wesentliche Vereinfachungen bei der Auslegung der digitalen Schaltung - beispielsweise die Möglichkeit, die Abtastwerte des Referenzträgers aus einer gespeicherten Tabelle auszulesen.

Die erfindungsgemäße Schaltungsanordnung ist ferner zur Demodulation eines Verkehrsfunksignals geeignet mit einem amplitudenmodulierten nicht unterdrückten Träger, der bei gleichzeitigem Auftreten von Radio-Daten-Signalen eine Phasenlage von 90° zu dem Hilfsträger der Radio-Daten-Signale hat.

Eine Verminderung des Rechenaufwandes wird bei der erfindungsgemäßen Schaltungsanordnung dadurch erzielt, daß der Referenzträger als Zahlenfolge 0, 1, 0, -1 ... im Falle einer Sinus-Phasenlage und als Zahlenfolge 1, 0, -1, 0 ... im Falle einer Cosinus-Phasenlage vorliegt.

Eine Weiterbildung der erfindungsgemäßen Schaltungsanordnung besteht darin, daß das zweite Ausgangssignal ein Verkehrsfunksignal im Basisband bildet. Hierdurch wird in einfacher Weise zusätzlich zum Radio-Daten-Signal ein gegebenenfalls vorhandenes Verkehrsfunksignal in das Basisband umgesetzt.

Bei einer anderen Weiterbildung der erfindungsgemäßen Schaltungsanordnung ist vorgesehen, daß zur Regelung der Phasenlage der Hilfssignale das erste, das zweite und ein durch Multiplikation des ersten mit dem zweiten Ausgangssignal entstandenes drittes Ausgangssignal über je einen Tiefpaß geleitet werden, daß das erste und das zweite tiefpaßgefilterte Ausgangssignal miteinander multipliziert und vom tiefpaßgefilterten dritten Ausgangssignal subtrahiert werden und daß das Ergebnis der Subtraktion über eine Schwellwertschaltung geleitet eine Steuerspannung für einen die Hilfssignale erzeugenden Generator bildet.

Hierdurch wird in besonders günstiger Weise eine Regelung der Phasenlage der Hilfssignale erzielt. Dabei kann vorzugsweise vorgesehen sein, daß das Ergebnis der Multiplikation des ersten und des zweiten jeweils über einen Tiefpaß geleiteten Ausgangssignals vor der Differenzbildung mit einer Konstanten multipliziert wird.

Zur Bildung der Hilfssignale im Rahmen der Erfindung kann eine vorteilhafte Schaltungsanordnung angewendet werden, die auch außerhalb der Erfindung in vorteilhafter Weise eingesetzt werden kann. Diese Schaltungsanordnung zur Erzeugung mindestens eines periodischen Signals gegebener Kurvenform in Abhängigkeit von einem zugeführten Steuersignal, das zwei Pegel einnehmen kann, ist dadurch gekennzeichnet, daß der Inhalt eines Registers durch Taktimpulse, deren Freuquenz wesentlich höher als die Frequenz des erzeugten Signals ist, in Abhängigkeit vom Pegel des Steuersignals inkrementiert oder dekrementiert wird, daß aus dem jeweiligen Inhalt des Registers ein Funktionswert berechnet wird, wobei der Wertebereich, den der Inhalt des Registers einnehmen kann, einer halben Periode des zu erzeugenden Signals entspricht und daß jeweils bei einem Überlauf und bei einem Unterlauf des Registers das Vorzeichen der berechneten Funktionswerte geändert wird.

Unter anderem für Zwecke der erfindungsgemäßen Schaltungsanordnung kann die Schaltungsanordnung zur Erzeugung mindestens eines periodischen Signals derart weitergebildet sein, daß der vorgegebene Verlauf sinusförmig ist, daß ein cosinusförmiges weiteres Signal erzeugt wird und daß die Funktionswerte durch Polynome berechnet werden.

Eine Weiterbildung der erfindungsgemäßen Schaltungsanordnung ist dadurch gekennzeichnet, daß Abtastwerte des in das Basisband herabgesetzten Radio-Daten-Signals und eines der Mischsignale jeweils für die Dauer einer Periode des RDS-Signals aufsummiert werden, daß von den aufsummierten Abtastwerten der Absolutbetrag gebildet wird und daß die Differenz der Absolutbeträge zu einem vorgegebenen Zeitpunkt zur Steuerung einer 180°-Phasenkorrektur verwendet wird. Diese Ausführungsform stellt eine günstige Möglichkeit zur Demodulation des bereits in das Basisband herabgesetzten Radio-Daten-Signals dar.

Eine weitere vorteilhafte Weiterbildung der erfindingsgemäßen Schaltungsanordnung besteht darin, daß zur Gewinnung des demodulierten Radio-Daten-Signals die aufsummierten Abtastwerte des Mischsignals verwendet werden.

Bei einer anderen vorteilhaften Ausführungsform dieser Weiterbildung ist vorgesehen, daß eine Erkennung eines 180°-Fehlers mittels eines Integrators erfolgt, dessen Zählrichtung durch die Differenz der Absolutbeträge bestimmt wird und der bei Überlauf eine 180°-Phasenkorrektur bewirkt.

Ausführungsbeispiele der Erfindung sind in der Zeichnung anhand mehrerer Figuren dargestellt und in der nachfolgenden Beschreibung näher erläutert. Es zeigt:

Fig. 1     einen Demodulator für Radio-Daten- und für Verkehrsfunk-Signale,

Fig. 2     einen im Demodulator nach Fig. 1 enthaltenen Mischer,

Fig. 3     eine in dem Demodulator nach Fig. 1 enthaltene Phasenregelschleife,

Fig. 4     einen Sinus/Cosinus-Generator für die Phasenregelschleife nach Fig. 3,

Fig. 5     eine Schaltungsanordnung zur Berechnung von Polynomen für den Generator nach Fig. 4,

Fig. 6     eine in der Demodulatorschaltung nach Fig. 1 enthaltenen Demodulator für Radio-Daten-Signale,

Fig. 7     eine Schaltung zur orthogonalen Transformation und

Fig. 8     einen in der Demodulatorschaltung nach Fig. 1 enthaltenen Demodulator für Verkehrsfunksignale.

Gleiche Teile sind in den Figuren mit gleichen Bezugszeichen versehen. Das Ausführungsbeispiel sowie Teile davon sind zwar als Blockschaltbilder dargestellt. Dieses bedeutet jedoch nicht, daß die erfindungsgemäße Schaltungsanordnung auf eine Realisierung mit Hilfe von einzelnen den Blöcken entsprechenden Schaltungen beschränkt ist. Die erfindungsgemäße Schaltungsanordnung ist vielmehr in besonders vorteilhafter Weise mit Hilfe von hochintegrierten Schaltungen realisierbar. Dabei können digitale Signalprozessoren eingesetzt werden, welche bei geeigneter Programmierung die in den Blockschaltbildern dargestellten Verarbeitungsschritte durchführen. Die erfindungsgemäße Schaltungsanordnung kann zusammen mit weiteren Schaltungsanordnungen innerhalb einer integrierten Schaltung wesentliche Teile eines Rundfunkempfängers bilden.

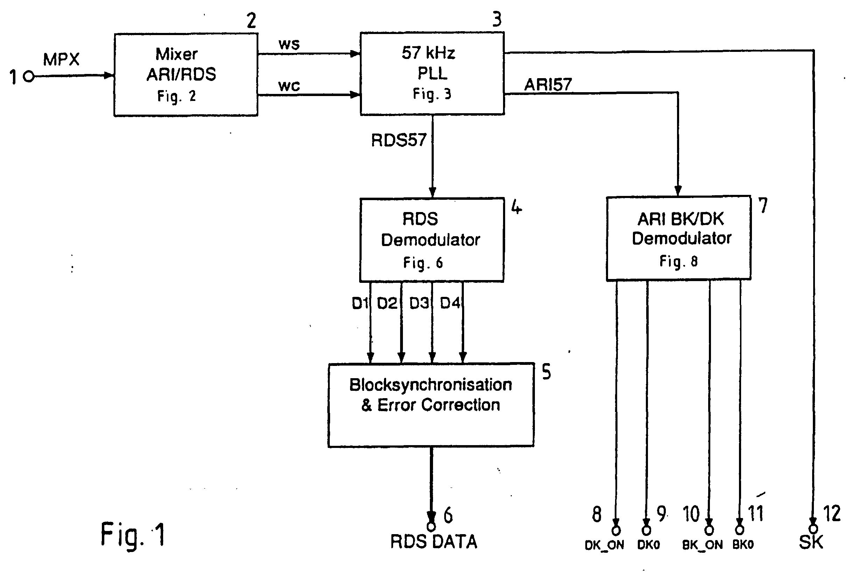

Dem Eingang 1 der Demodulatorschaltung nach Fig. 1 ist ein Multiplexsignal zuführbar, das zusätzlich zur Audio-Information je nach empfangenen Sender ein Verkehrsfunksignal, ein Radio-Daten-Signal oder beide Signale enthält. Das Verkehrsfunksignal besteht in an sich bekannter Weise aus einem amplitudenmodulierten Hilfsträger, dessen Frequenz 57 kHz beträgt. Zur Übertragung des Radio-Daten-Signals erfolgt eine Phasenumtastung eines unterdrückten Hilfsträgers mit der üblicherweise ausgestrahlten Frequenz von 1187,5 Hz.

Das zugeführte Multiplexsignal MPX gelangt zunächst zu einem Mischer 2, in welchem es mit einem aus einem im Rundfunkempfänger erzeugten Abtasttakt gewonnenen Referenzträger in zwei gegeneinander um 90° verschobenen Phasenlagen multipliziert wird. Dabei entstehen die Mischsignale ws und wc. Da der Referenzträger nicht mit dem Hilfsträger verkoppelt ist, sind die Mischsignale ws, wc mit Fehlern behaftet, welche durch die sich ändernde Phasenlage zwischen dem Referenzträger und dem Hilfsträger entstehen. Zur Korrektur dieser Fehler ist eine Phasenregelschleife 3 vorgesehen.

Mit Hilfe des Mischers 2 und der Phasenregelschleife 3 werden die trägerfrequenten Radio-Daten- und Verkehrsfunk-Signale in das Basisband herabgesetzt, wobei durch eine besondere Ausgestaltung der Phasenregelschleife 3 gleichzeitig eine Trennung der Verkehrsfunksignale ARI von den Radio-Daten-Signalen RDS erfolgt.

Das Signal RDS wird in einem RDS-Demodulator 4 demoduliert, dessen Ausgangssignale D1 bis D4 einer Schaltung 5 zur Blocksynchronisation und Fehlerkorrektur zugeleitet werden, deren Ausgang 6 die RDS-Daten führt.

Das Signal ARI wird in einem Verkehrsfunk-Demodulator 7 demoduliert, wobei für die Bereichskennung BK und für die Durchsagekennung DK Signale erzeugt werden, welche die Anwesenheit einer solchen Kennung bezeichnen (BK_ON, BK0, DK_ON, DK0). Diese Signale sind an Ausgängen 8, 9, 10, 11 abnehmbar. In der Phasenregelschleife 3 entsteht außerdem bei Vorhandensein des Hilfsträgers ein Signal SK, das Sender kennzeichnet, die Verkehrsdurchsagen aussenden. Dieses Signal ist an einem Ausgang 12 abnehmbar.

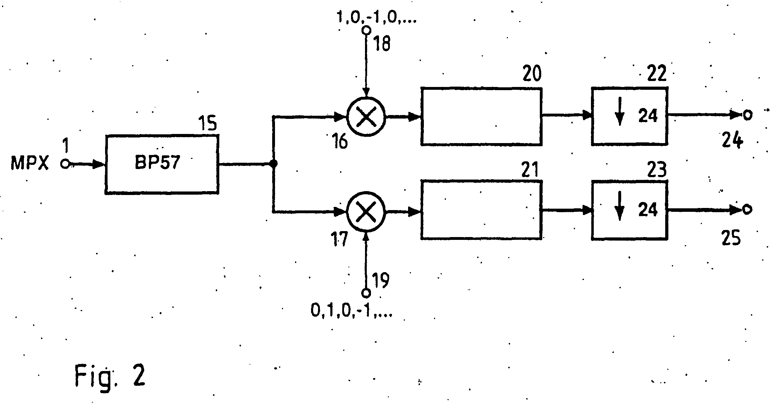

Fig. 2 zeigt den Mischer 2 (Fig. 1) in detaillierterer Darstellung. An den Eingang 1 ist zunächst ein Bandpaß 15 angeschlossen, der die in den Bereich des modulierten Hilfsträgers fallenden Spektralkomponenten des Multiplexsignals MPX weiterleitet, wobei die Bandbreite so bemessen ist, daß eine ausreichende Unterdrückung des Multiplexsignals und anderer störender Signalanteile erreicht wird. An den Bandpaß 15 schließen sich zwei Multiplizierer 16, 17 an, denen außer dem Ausgangssignal des Bandpasses 15 über Eingänge je ein Referenzträger zugeführt wird, der aus einem im Rundfunkempfänger erzeugten Taktsignal abgeleitet wird. Diese Träger haben eine Frequenz von 57 kHz, sind jedoch nicht mit dem Hilfsträger verkoppelt. Zur Vereinfachung der Rechenoperationen liegt das Multiplexsignal hier vorteilhafterweise mit einer Abtastfrequenz von 228 kHz vor. Die Abtastwerte der bei 18, 19 zugeführten Referenzträger können aus einer Folge der Zahlen 1, 0, -1, 0 bzw. 0, 1, 0 -1 für jeweils eine Periode des Referenzträgers bestehen.

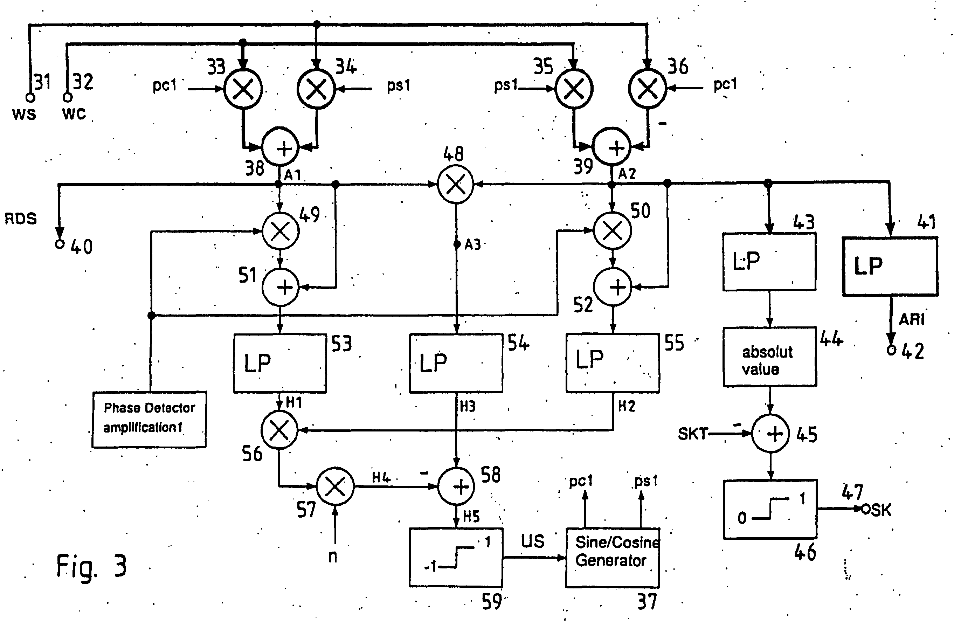

In anschließenden Filtern 20, 21, die als FIR-Filter ausgebildet sind, werden höherfrequente Mischprodukte unterdrückt, so daß lediglich das Basisband verbleibt. Außerdem wird durch die Filter 20, 21 eine nachfolgende Abtastratenreduktion um den Teiler 24 bei 22, 23 ermöglicht. Dadurch können die nachfolgenden Signalverarbeitungsschritte mit einer niedrigeren Geschwindigkeit durchgeführt werden. Die Mischsignale wc und ws werden bei 24, 25 entnommen und der Phasenregelschleife 3 (Fig. 1, Fig. 3) zugeführt.

Die den Eingängen 31, 32 der Phasenregelschleife nach Fig. 3 zugeführten Mischsignale ws und wc werden mit Hilfe je eines Multiplizierers 33, 34, 35, 36 jeweils mit einem sinusförmigen Hilfssignal ps1 und einem dazu um 90° phasenverschobenen Hilfssignal pc1 multipliziert. Die Hilfssignale werden in einem Sinus/Cosinus-Generator 37 erzeugt. Die Ausgangssignale der Multiplizierer 33, 34 werden bei 38 addiert, während eine Subtraktion der Ausgangssignale der Multiplizierer 35, 36 bei 39 erfolgt. Mit Hilfe der im folgenden beschriebenen Phasenregelung wird erreicht, daß am Ausgang 40 des Addierers 38 das ins Basisband herabgesetzte Radio-Daten-Signal RDS ansteht, während dem Ausgang des Subtrahierers 39 über einen Tiefpaß 41 das ins Basisband herabgesetzte Verkehrsfunksignal ARI entnommen werden kann.

Mit Hilfe eines weiteren Tiefpasses 43, einer Absolutwertbildung 44, einem Subtrahierer 45 und einer Schwellwertschaltung 46 wird aus der Amplitude des Ausgangssignals des Addierers 39 ein Signal SK abgeleitet, das einem Ausgang 47 entnehmbar ist und Sender mit Verkehrsfunk anzeigt.

Im folgenden wird die Steuerung des Sinus/Cosinus-Generators 37 mit Hilfe der Ausgangssignale A1 und A2 der Addierer 38, 39 beschrieben. Mit einem Multiplizierer 48 wird zunächst ein weiteres Signal A3 gebildet. Die weiteren Multiplizierer 49, 50 und Addierer 51, 52 für die Signale A1 und A2 dienen zur Steuerung der Schleifenverstärkung und damit des Einschwingverhaltens. Die Signale A1, A2, A3 werden mit Hilfe von Tiefpässen 53, 54, 55 von höherfrequenten Anteilen befreit. Die Ausgangssignale H1, H2 der Tiefpässe 53, 55 werden bei 56 miteinander und das Ergebnis bei 57 mit einer Konstanten n multipliziert. Das Ergebnis dieser Multiplikation wird vom Ausgangssignal H3 des Tiefpasses 54 bei 58 subtrahiert. Über eine Schwellwertschaltung 49 wird dann ein Signal US erzeugt, das den Sinus/Cosinus-Generator 37 steuert.

Die Signale A1 und A2 haben folgende Form:

$$A1 = r \cdot \cos(phi) - a \cdot \sin(phi)$$

$$A2 = r \cdot \sin(phi) + a \cdot \cos(phi),$$

wobei phi der Phasenfehler zwischen dem Eingangssignal $r \cdot \cos(2\pi 57 kHz + phi) + a \cdot \sin(2\pi 57 kHz + phi)$, r die RDS-Modulation und a die Verkehrsfunk-Modulation ist.

Der Phasendetektor hat die Aufgabe, aus den Signalen A1 und A2 ein Signal zur Steuerung des Sinus/Cosinus-Generators 37 zu erzeugen, das proportional zum Phasenfehler ist. Dazu wird ferner das Signal A3 verwendet, das sich durch Multiplikation der Signale A1 und A2 wie folgt ergibt:

$$A3 = A1 \cdot A2 = 0{,}5 \cdot [r^2 - a^2] \cdot \sin(2 \cdot phi) + [r \cdot a \cdot \cos(2 \cdot phi)]/2$$

Die Ausgangssignale der Tiefpässe 53, 55 werden im folgenden mit H1 und H2 bezeichnet. Die Grenzfrequenz der Tiefpässe 53, 55 ist derart gewählt, daß die RDS-Spektralanteile unterdrückt werden, d. h.:

$$H1 = -a \cdot \sin(phi); \quad H2 = a \cdot \cos(phi).$$

Entsprechend wird die Grenzfrequenz des Tiefpasses 54 gewählt, so daß das Signal H3 folgende Form erhält:

$$H3 = 0{,}5 \cdot [r^2 - a^2] \cdot \sin(2 \cdot phi).$$

Das Signal H4 wird dann $H4 = -a^2 \cdot \sin(2 \cdot phi)$.

Somit berechnet sich das Steuersignal H5 für den Sinus/Cosinus-Generator 37 zu

$$H5 = 0{,}5 \cdot [r^2 + a^2] \cdot \sin(2 \cdot phi).$$

Dieses Steuersignal H5 steuert den Sinus/Cosinus-Generator 37 unabhängig vom Vorzeichen der Modulation. Es können drei Fälle auftreten, daß nämlich sowohl ein Verkehrsfunksignal als auch ein Radio-Daten-Signal oder daß eines von beiden empfangen wird. Die folgenden Gleichungen zeigen, daß der Sinus/Cosinus-Generator 37 in allen Fällen nur vom Phasenfehler phi bzw. von $\sin(2 \cdot phi)$ gesteuert wird.

| RDS + Verkehrsfunk | $H5 = 0{,}5 \cdot [r^2 + a^2] \cdot \sin(2 \cdot phi)$ |
|---|---|
| nur RDS | $H5 = 0{,}5 \cdot r^2 \cdot \sin(2 \cdot phi)$ |
| nur Verkehrsfunk | $H5 = 0{,}5 \cdot a^2 \cdot \sin(2 \cdot phi)$ |

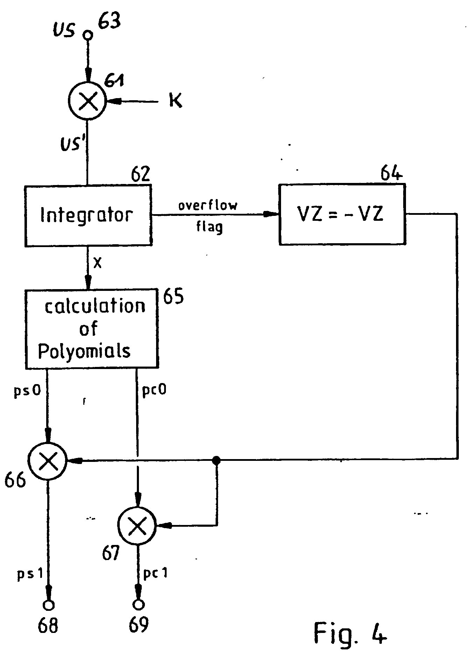

Fig. 4 zeigt ein vorteilhaftes Ausführungsbeispiel für den Sinus/Cosinus-Generator 37 (Fig. 3). Ein Integrator 62 integriert das bei 63 zugeführte Steuersignal US, das lediglich ein Vorzeichen darstellt und beispielsweise die Werte -1 und +1 einnehmen kann. Durch Multiplikation mit einem Faktor K bei 61 erfolgt eine Skalierung derart, daß US' wesentlich kleiner als der Integrations- bzw. Zählbereich des Integrators 62 ist. Der Integrator 62 ist ein Register, das von Taktimpulsen in Abhängigkeit vom Signal US inkrementiert oder dekrementiert wird und bei Überschreiten bzw. Unterschreiten des Zählbereichs am jeweils anderen Ende des Zählbereichs weiterläuft. Dabei wird ein Überlaufsignal erzeugt, das bei 64 den Wechsel eines Vorzeichens VZ bewirkt.

Der jeweilige Inhalt x des Integrators 62 wird einer Schaltung 65 zur Berechnung von Polynomen zugeführt, welche eine gute Annäherung an die gewünschte Sinus- bzw-Cosinus-Funktion darstellen. Ausgänge der Schaltung 65 sind mit Multiplizierern 66, 67 zur Multiplikation der jeweils berechneten Werte ps0, pc0 mit dem Vorzeichen VZ vorgesehen. Den Ausgängen 68, 69 können das sinusförmige und das consinusförmige Signal ps1, pc1 entnommen werden. Dadurch, daß bei jeweils einem Überlauf des Integrators ein Vorzeichenwechsel der errechneten Werte vorgenommen wird, kann der Integratorwertebereich mittels einer Abbildung und einer Skalierung der Polynomkoeffizienten mit dem Definitionsintervall $[-\pi/2, \pi/2]$ für die Polynome identifiziert werden.

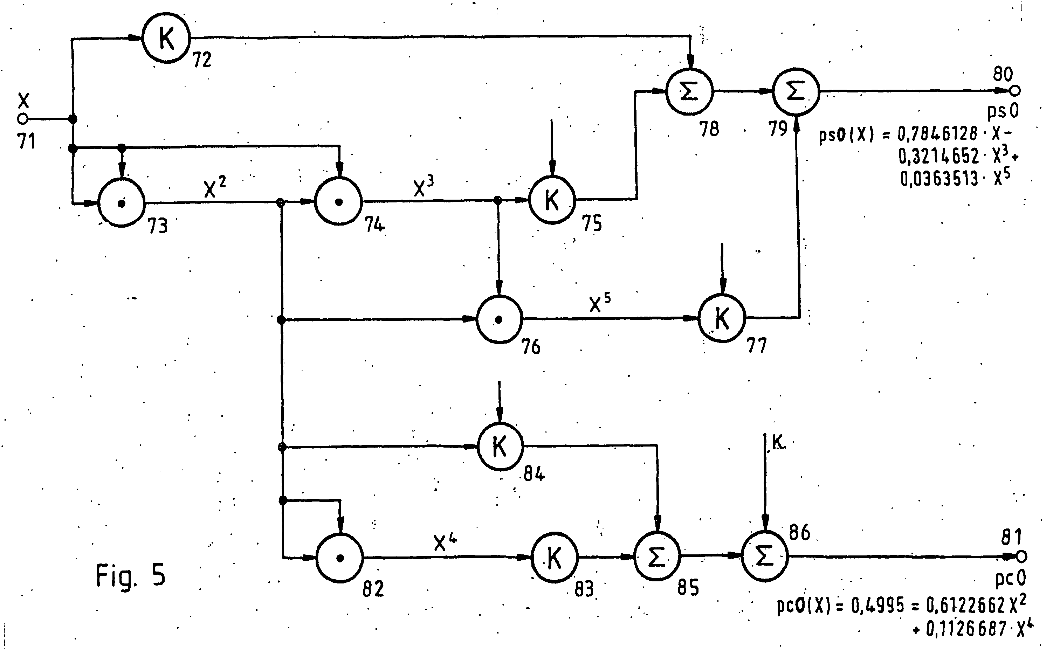

Ein Ausführungsbeispiel für die Berechnung der Polynome ist in Fig. 5 dargestellt. Der Integratorinhalt x wird bei 71 zugeführt, bei 72 mit einem ersten Koeffizienten, bei 73 mit sich selbst und bei 74 mit dem Ergebnis der Multiplikation bei 73 multipliziert. Das Ergebnis $x^3$ der Multiplikation bei 74 wird bei 75 mit einem zweiten Koeffizienten und bei 76 mit $x^2$ multipliziert, so daß am Ausgang des Multiplizierers 76 $x^5$ entsteht, das bei 77 mit dem dritten Koeffizienten multipliziert wird. Mit Hilfe zweier Addierer 78, 79 wird dann das am Ausgang 80 abnehmbare Polynom ps0 gebildet.

Zur Bildung des am weiteren Ausgang 81 abnehmbaren Polynoms pc0 wird bei 82 durch Multiplikation von $x^2$ mit sich selbst $x^4$ gebildet, das bei 83 mit einem Koeffizienten multipliziert wird. $x^2$ wird bei 84 mit einem weiteren Koeffizienten multipliziert. Die Summe der damit gebildeten Polynomglieder und einer Konstanten wird mit Hilfe der Addierer 85 und 86 gebildet.

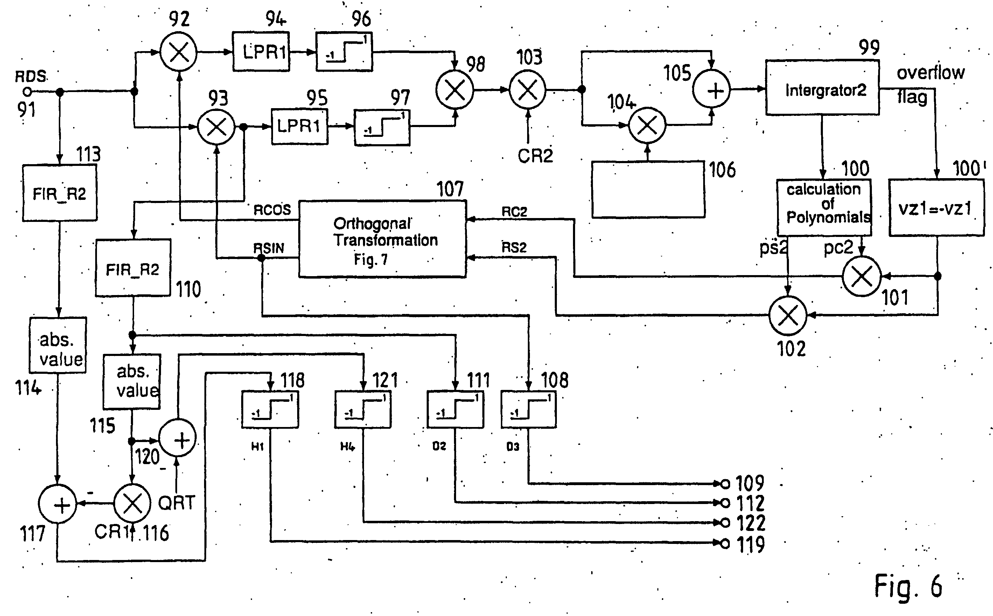

Dem RDS-Demodulator nach Fig. 6 wird über einen Eingang 91 das Signal RDS von der Phasenregelschleife 3 (Fig. 1) zugeführt. Mit Hilfe einer als Costas Loop bekanntgewordenen Schaltung wird ein Träger RSIN der Frequenz 1,1875 Hz erzeugt, der mit dem Träger der RDS-Modulation in folgender Phasenbeziehung liegt: gleichphasig oder Phasendifferenz +180° oder -180°. Diese Schleife ist wie folgt aufgebaut: Zunächst wird das Signal RDS bei 92, 93 mit dem erzeugten Träger RSIN und dem um 90° zu diesem phasenverschobenen Träger RCOS multipliziert. Die Ergebnisse dieser Multiplikationen werden bei 94, 95 tiefpaßgefiltert und über Schwellwertschaltungen 96, 97 einem weiteren Multiplizierer 98 zugeführt. Dessen Ausgangssignal steuert einen Sinus/Cosinus-Generator, der wie der Cosinus-Generator nach Fig. 4 aus einem Integrator 99, einer Schaltung 100 zur Berechnung von Polynomen, einer Schaltung 100' zur Umschaltung des Vorzeichens und zwei Multiplizierern 101, 102 aufgebaut ist.

Bevor das Ausgangssignal des Multiplizierers 98 dem Integrator 99 zugeführt wird, wird es bei 103 mit einer Konstanten CR2 multipliziert, welche die Schleifenverstärkung beeinflußt. Um die Schleifenverstärkung beim Einschalten zu erhöhen, sind ferner ein Multiplizierer 104 und ein Addierer 105 vorgesehen, wobei dem Multiplizierer 104 aus einer Schaltung 106 ein Signal zugeführt wird, das bei Beginn einer Synchronisierung groß ist und danach abfällt. Damit wird ein schnelleres Einschwingen der Phasenregelschleife bewirkt.

Die mit Hilfe des Sinus/Cosinus-Generators 99 bis 102 erzeugten Signale RS2 und RC2 werden einer Schaltung 107 zur orthogonalen Transformation zugeführt, welche die beiden Träger RSIN und RCOS erzeugt.

Der Träger RSIN wird über eine Schwellwertschaltung 108 in ein binäres Signal D3 umgewandelt und wird der Schaltung 5 (Fig. 1) zugeführt. Zur Gewinnung eines die Daten enthaltenen Signals D2 wird das Ergebnis der Multiplikation 93 über ein FIR-Filter 110 und über eine Schwellwertschaltung 111 geleitet. Das Signal steht dann am Ausgang 112 zur Weiterleitung an die Schaltung 5 (Fig. 1) zur Verfügung. Das FIR-Filter 110 mittelt die jeweils acht letzten Abtastwerte (dies entspricht einer Bitperiode des Radio-Daten-Signals von 1/1,875kHz).

Durch die Unterdrückung des Hilfsträgers bei der Übertragung des Radio-Daten-Signals besteht keine Eindeutigkeit über die 180°-Phasenlage des demodulierten Signals. Zur Korrektur des gegebenenfalls vorhandenen 180°-Fehlers wird das Signal RDS über ein weiteres FIR-Filter 113 mit ebenfalls acht Abtastwerten geleitet. Danach wird von den aufsummierten Abtastwerten bei 114 der Absolutbetrag gebildet. Auch von den Ausgangssignalen des FIR-Filters 110 wird bei 115 der Absolutbetrag gebildet. Dieser wird bei 116 mit einer Konstanten CR1 multipliziert und von dem Absolutwert der Ausgangssignale des FIR-Filters 113 bei 117 subtrahiert. Das Ergebnis wird über eine Schwellwertschaltung 118 geleitet und stellt ein Signal D1 dar, das zur Korrektur der 180°-Phasenlage dient und von einem Ausgang 119 der Schaltung 5 (Fig. 1) zugeführt werden kann. Aus dem Absolutwert der Ausgangssignale des FIR-Filters 110 kann ferner mit Hilfe einer Subtrahierschaltung 120, der eine Konstante QRT zuführbar ist, und mit Hilfe einer Schwellwertschaltung 121 ein Signal D4 erzeugt werden, das die Qualität des jeweils empfangenen Bits kennzeichnet und an einem Ausgang 122 abnehmbar ist.

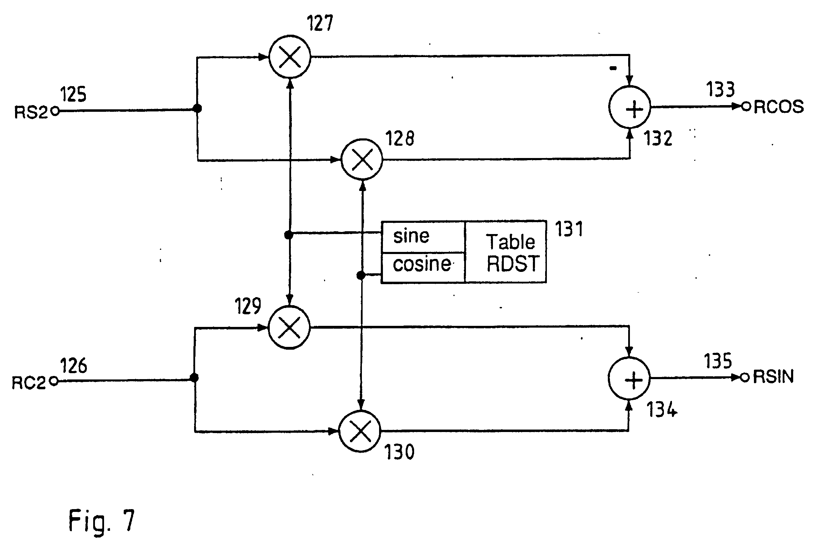

Fig. 7 stellt ein Ausführungsbeispiel für eine Schaltung 107 zur orthogonalen Transformation dar. Die beiden Hilfssignale aus dem Sinus/Cosinus-Generator 98 bis 102 (Fig. 6) werden Eingängen 125, 126 zugeführt und gelangen von dort zu jeweils zwei Multiplizierern 127, 128 und 129, 130. Den Multiplizierern werden ferner aus einer Tabelle 131 Funktionswerte eines Sinus- und eines Cosinus-Trägers zugeführt. Dabei genügen wenige Abtastwerte pro Periode - im vorliegenden Beispiel acht Abtastwerte. Die Ausgangssignale der Multiplizierer 27, 28 werden bei 132 subtrahiert und bilden am Ausgang 131 den Träger RCOS. Die Ausgangssignale der Multiplizierer 129, 130 werden bei 134 addiert und bilden am Ausgang 135 den Träger RSIN.

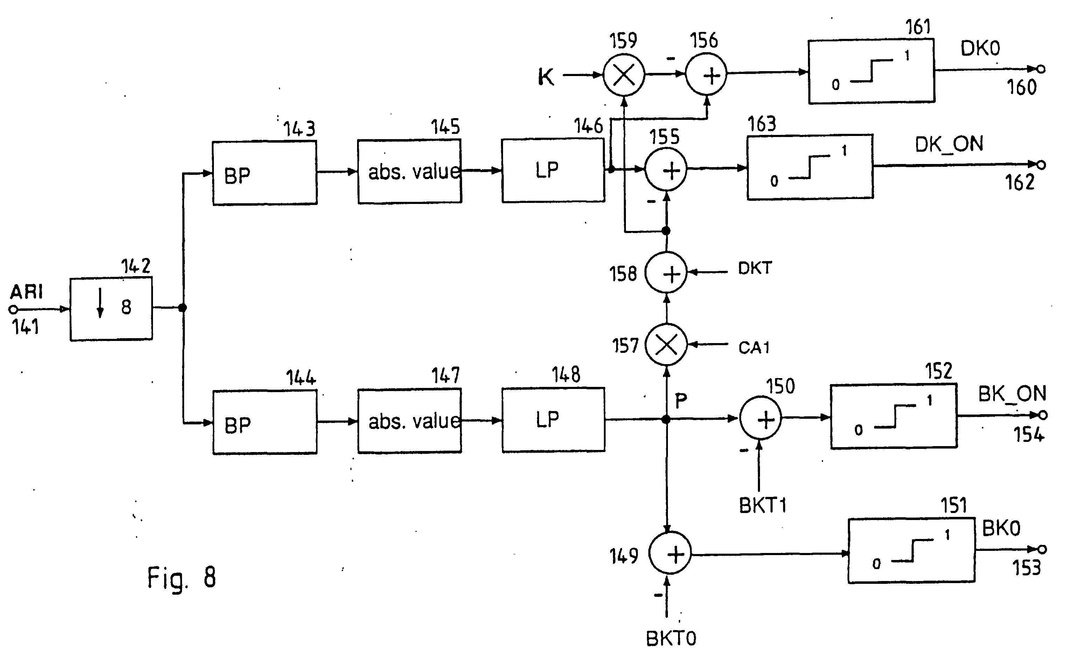

Dem Verkehrsfunk-Demodulator nach Fig. 8 wird bei 41 das Verkehrsfunksignal ARI zugeführt. Nach einer Abtastratenreduzierung bei 142 um den Teiler 8 gelangt das Signal ARI zu zwei Bandpässen 143, 144. Der Bandpaß 143 ist schmalbandig auf 125 Hz ausgelegt, so daß lediglich das Durchsagekennungs-Signal den Bandpaß passiert. Danach erfolgt eine Amplitudendemodulation dieses Signals durch eine Absolutwertbildung 145 und einen nachfolgenden Tiefpaß 146.

Der Bandpaß 144 hat eine Bandbreite von etwa 20 Hz bis 60 Hz und läßt somit alle Bereichskennungssignale durch. Mit der beschriebenen Schaltung erfolgt also keine Selektion der einzelnen Bereiche, es wird lediglich festgestellt, ob eine Bereichskennung gesendet wird. Auch das Ausgangssignal des Bandpasses 144 wird mit Hilfe einer Absolutwertbildung 147 und eines Tiefpasses 148 amplitudendemoduliert. Aus den demodulierten Kennsignalen werden jeweils zwei binäre Signale abgeleitet, deren Pegel von 0 auf 1 bei verschiedenen Pegeln des demodulierten Kennsignals springt. Diese Pegel, beispielsweise 50% und 80% eines Maximalwertes, werden als Konstanten BKT0 und BKT1 Subtrahierern 149, 150 zugeleitet, an die sich jeweils eine Schwellwertschaltung 151, 152 anschließt. Ausgängen 153, 154 können dann Signale BK0 und BK_ON entnommen werden, die anzeigen, daß eine Bereichskennung empfangen wird.

Um eine Ableitung der Durchsagekennung möglichst unabhängig von der empfangenen Feldstärke durchführen zu können, wird den Subtrahierern 155, 156 für die Durchsagekennung ein von der Amplitude des demodulierten Bereichskennungssignals abhängiger Vergleichswert zugeführt, wozu das demodulierte Bereichskennungssignal zunächst bei 157 mit einer Konstanten CA1 multipliziert wird und danach eine weitere Konstante DKT bei 158 addiert wird.

Der Schwellwert für die DK_ON-Erkennung ist vom Pegel der BK-Erkennung (und damit vom Pegel des Verkehrsfunksignals selbst) abhängig. Der Schwellwert für dir DK_ON-Erkennung berechnet sich zu:

$$\text{Schwellwert} = \text{CA1} \cdot \text{P} + \text{DKT}.$$

Vor dem Subtrahierer 156 wird das Ausgangssignal des Addierers 158 bei 159 mit einer Konstanten K multipliziert. Dadurch nimmt das Signal DK0 am Ausgang 160 der Schwellwertschaltung 161 bereits bei einem Anteil des Pegels den Wert 1 an wie das Signal DK_ON am Ausgang 162 der Schwellwertschaltung 163.

## Patentansprüche

1. Schaltungsanordnung für einen Demodulator eines Radio-Daten-Signals in einem Rundfunkempfänger, wobei die Übertragung des Radio-Daten-Signals durch Phasenumtastung eines unterdrückten Hilfssignals innerhalb eines Multiplexsignals erfolgt,
   **dadurch gekennzeichnet,**
   **dass** ein Mischer (2) vorgesehen ist, der das Multiplexsignal (MPX) in digitaler Form nach einer Bandpassfilterung mit einem aus einem im Rundfunkempfänger erzeugten Abtasttakt gewonnenen Referenzträger in zwei um 90° gegeneinander verschobenen Phasenlagen in das Basisband mischt, wobei ein erstes und ein zweites Mischsignal (wc, ws) entstehen,
   **dass** Generatormittel (37) zur Erzeugung eines ersten und eines zweiten Hilfssignals (pc1, ps1) mit einem sinus- und einem cosinusförmigen Verlauf vorgesehen sind,
   **dass** Multiplikationsmittel (33, 34) vorgesehen sind, die das erste Mischsignal (wc) mit dem ersten Hilfssignal (pc1) und das zweite Mischsignal (ws) mit dem zweiten Mischsignal (ps1) multiplizieren, wobei Additionsmittel (38) vorgesehen sind, die die Ergebnisse dieser Multiplikationen zur Bildung eines ersten Ausgangssignals (A1) addieren,
   **dass** weitere Multiplikationsmittel (35, 36) vorgesehen sind, die das erste Mischsignal (wc) mit dem zweiten Hilfssignal (ps1) und das zweite Mischsignal (ws) mit dem ersten Mischsignal (pc1) multiplizieren, wobei Subtraktionsmittel (39) vorgesehen sind, die die Ergebnisse dieser Multiplikationen zur Bildung eines zweiten Ausgangssignals (A2) subtrahieren, und
   **dass** Mittel zur Phasenregelung (49, 50, ..., 59, 37) vorgesehen sind, die die Phasenlage der Hilfssignale (pc1, ps1) derart steuern, dass das erste Ausgangssignal (A1) dem in das Basisband herabgesetzten Radio-Daten-Signal (RDS) entspricht.

2. Schaltungsanordnung nach Anspruch 1, **dadurch gekennzeichnet, dass** der Referenzträger als Zahlenfolge 0, 1, 0, -1 ... im Falle einer Sinus-Phasenlage und als Zahlenfolge 1, 0, -1, 0 im Falle einer Cosinus-Phasenlage vorliegt.

3. Schaltungsanordnung nach einer der Ansprüche 1 oder 2, **dadurch gekennzeichnet, dass** das zweite Ausgangssignal (A2) ein Verkehrsfunksignal im Basisband bildet.

4. Schaltungsanordnung nach einem der Ansprüche 1 oder 2, **dadurch gekennzeichnet, dass** zur Regelung der Phasenlage der Hilfssignale (pc1, ps1) das erste, das zweite und ein durch Multiplikation des ersten mit dem zweiten Ausgangssignal (A1, A2) entstandenes drittes Ausgangssignal (A3) über je einem Tiefpass (53, 54, 55) geleitet sind, dass Multiplikationsmittel (48) vorgesehen sind, die das erste und das zweite tiefpassgefilterte Ausgangssignal (H1, H2) miteinander multiplizieren und ferner Subtraktionsmittel (58) vorgesehen sind, die das Ergebnis dieser Multiplikation vom dritten tiefpassgefilterten Ausgangssignal (H3) subtrahieren, und dass eine Schwellwertschaltung (59) vorgesehen ist, die aus dem Ergebnis (59) der Subtraktion eine Steuerspannung für den die Hilfssignale (pc1, ps1) erzeugenden Generator (37) bildet.

5. Schaltungsanordnung nach Anspruch 3, **dadurch gekennzeichnet, dass** das Multiplikationsmittel (57) vorgesehen sind, in denen das Ergebnis der Multiplikation des ersten und des zweiten jeweils über einen Tiefpass (53, 55) geleiteten Ausgangssignals (H1, H2) vor der Differenzbildung mit einer Konstanten (n) multipliziert wird.

6. Schaltungsanordnung nach einem der vorhergehenden Ansprüche mit Generatormitteln (37) zur Erzeugung mindestes eines periodischen Signals gegebener Kurvenform in Abhängigkeit von einem zugeführten Steuersignal (us), das zwei Pegel einnehmen kann, welche **dadurch gekennzeichnet sind, dass** ein Register vorgesehen ist, das derart ausgebildet ist, dass der Inhalt des Registers (62) durch Taktimpulse, deren Frequenz wesentlich höher als die Frequenz des erzeugten Signals ist, in Abhängigkeit vom Pegel des Steuersignals inkrementiert oder dekrementiert wird, dass eine Schaltung (65) vorgesehen ist, die aus dem jeweiligen Inhalt des Registers (62) einen Funktionswert berechnet, wobei der Wertebereich, den der Inhalt des Registers (62) einnehmen kann, einer halben Periode des zu erzeugenden Signals entspricht, und dass Mittel (64, 66, 67) vorgesehen sind, die bei einem Überlauf und bei einem Unterlauf des Registers (62) einen Wechsel des Vorzeichens der berechneten Funktionswerte bewirken.

7. Schaltungsanordnung nach Anspruch 6, **dadurch gekennzeichnet, dass** die gegebene Kurvenform sinusförmig ist, dass Mittel (65) zur Erzeugung eines cosinusförmigen weiteren Signals vorgesehen sind, wobei die Funktionswerte durch Polynome berechnet werden.

8. Schaltungsanordnung nach einem der vorhergehenden Ansprüche, **dadurch gekennzeichnet, dass** Mittel (113, 110) vorgesehen sind, die Abtastwerte des in das Basisband herabgesetzten Radio-Daten-Signals (RDS) und eines der Mischsignale jeweils für die Dauer einer Periode des RDS-Signals aufsummieren, dass Absolutwertbildungsmittel (114, 115) vorgesehen sind, die von den aufsummierten Abtastwerten den Absolutbetrag bilden, und dass zur Bildung eines zur Steuerung einer 180°-Phasenkorrektur dienenden Signals (D1) Subtraktionsmittel (117) zur Bildung der Differenz der Absolutbeträge zu einem bestimmten Zeitpunkt vorgesehen sind.

9. Schaltungsanordnung nach Anspruch 8, **dadurch gekennzeichnet, dass** zur Gewinnung des demodulierten Radio-Daten-Signals die aufsummierten Abtastwerte des Mischsignals verwendbar sind.

10. Schaltungsanordnung nach Anspruch 8, **dadurch gekennzeichnet**, das eine Erkennung eines 180°-Fehlers mittels eines Integrators erfolgt, dessen Zählrichtung durch die Differenz der Absolutbeträge bestimmt wird und der bei Überlauf eine 180°-Phasenkorrektur bewirkt.

**Claims**

1. Circuit arrangement for a demodulator for a radio data signal in a broadcast radio receiver, where the radio data signal is transmitted by phase shift keying a suppressed auxiliary signal within a multiplex signal,
**characterized**
**in that** a mixer (2) is provided which mixes the multiplex signal (MPX) in digital form, following band pass filtering, with a reference carrier obtained from a sampling clock generated in the broadcast radio receiver to baseband in two phases shifted through 90° with respect to one another, the result being a first and a second mixed signal (wc, ws),
**in that** generator means (37) are provided for generating a first and a second auxiliary signal (pc1, ps1) having a sine waveform and a cosine waveform,
**in that** multiplication means (33, 34) are provided which multiply the first mixed signal (wc) by the first auxiliary signal (pc1) and multiply the second mixed signal (ws) by the second mixed signal (ps1), with addition means (38) being provided which add the results of these multiplication operations to form a first output signal (A1),
**in that** further multiplication means (35, 36) are provided which multiply the first mixed signal (wc) by the second auxiliary signal (ps1) and multiply the second mixed signal (ws) by the first mixed signal (pc1), with subtraction means (39) being provided which subtract the results of these multiplication operations to form a second output signal (A2), and **in that** means for phase control (49, 50, ... , 59, 37) are provided which control the phase of the auxiliary signals (pc1, ps1) such that the first output signal (A1) corresponds to the radio data signal (RDS) reduced to baseband.

2. Circuit arrangement according to Claim 1, **characterized in that** the reference carrier is present as a numerical sequence 0, 1, 0, -1, ... in the case of a sine phase and is present as a numerical sequence 1, 0, - 1, 0 in the case of a cosine phase.

3. Circuit arrangement according to either of Claims 1 and 2, **characterized in that** the second output signal (A2) forms a traffic radio signal in the baseband.

4. Circuit arrangement according to either of Claims 1 and 2, **characterized in that** the phase of the auxiliary signals (pc1, ps1) is controlled by passing the first, the second and a third output signal (A3), obtained by multiplying the first and second output signals (A1, A2), via a respective low-pass filter (53, 54, 55), **in that** multiplication means (48) are provided which multiply the first and second low-pass filtered output signals (H1, H2) by one another, and also subtraction means (58) are provided which subtract the result of this multiplication operation from the third low-pass filtered output signal (H3), and **in that** a threshold-value circuit (59) is provided which takes the result (59) of the subtraction operation and forms a control voltage for the generator (37) which generates the auxiliary signals (pc1, ps1).

5. Circuit arrangement according to Claim 3, **characterized in that** the multiplication means (57) are provided in which the result of the multiplication operation on the first and second output signals (H1, H2), respectively passed via a low-pass filter (53, 55), is multiplied by a constant (n) before the formation of a difference.

6. Circuit arrangement according to one of the preceding claims, having generator means (37) for generating at least one cyclic signal having a given curve shape on the basis of a supplied control signal (us) which can assume two levels which are **characterized in that** a register is provided which is in a form such that the content of the register (62) is incremented or decremented on the basis of the level of the control signal by clock pulses whose frequency is much higher than the frequency of the generated signal, **in that** a circuit (65) is provided which takes the respective content of the register (62) and calculates a function value, where the value range which the content of the register (62) can assume corresponds to a half-cycle of the signal which is to be generated, and **in that** means (64, 66, 67) are provided which prompt a change in the arithmetic sign of the calculated function values if the register (62) overflows or underflows.

7. Circuit arrangement according to Claim 6, **characterized in that** the given curve shape is sinusoidal, **in that** means (65) for generating a further signal having a cosine shape are provided, with the function values being calculated by polynomials.

8. Circuit arrangement according to one of the preceding claims, **characterized in that** means (113, 110) are provided which sum samples of the radio data signal (RDS) reduced to baseband and of one of the mixed signals, in each case for the duration of one cycle of the RDS signal, **in that** absolute-value formation means (114, 115) are provided which form the absolute magnitude from the summed samples, and **in that** a signal (D1) used to control a 180° phase correction is formed by providing subtraction means (117) for forming the difference between the absolute magnitudes at a particular time.

9. Circuit arrangement according to Claim 8, **characterized in that** the demodulated radio data signal can be obtained by using the summed samples of the mixed signal.

10. Circuit arrangement according to Claim 8, **characterized in that** a 180° error is identified using an integrator whose counting direction is determined by the difference between the absolute magnitudes and which prompts a 180° phase correction in the event of overflow.

**Revendications**

1. Arrangement de circuit pour un démodulateur d'un signal de données radio dans un récepteur radio, la transmission du signal de données radio ayant lieu par un déplacement de phase d'un signal auxiliaire atténué à l'intérieur d'un signal multiplex,
**caractérisé en ce que**
l'on prévoit un mélangeur (2) qui mélange le signal multiplex (MPX) sous forme numérique après une filtration par filtre passe-bande à un porteur de référence, obtenu à partir d'une cadence de balayage produite dans le récepteur radio, en deux positions de phase en quadrature l'une par rapport à l'autre dans la bande de base, ce qui permet d'obtenir un premier et un deuxième signal mélangé (wc, ws), l'on prévoit des moyens de génération (37) destinés à produire un premier et un deuxième signal auxiliaire (pc1, ps1) dont le tracé est sinusoïdal ou co-sinusoïdal, l'on prévoit des moyens de multiplication (33, 34) qui multiplient le premier signal mélangé (wc) par le premier signal auxiliaire (pc1) et le deuxième signal mélangé (ws) par le deuxième signal [auxiliaire] (ps1) - on prévoit alors des moyens d'addition (38) qui additionnent les résultats de ces multiplications pour former un premier signal de sortie (A1), l'on prévoit d'autres moyens de multiplication (35, 36) qui multiplient le premier signal mélangé (wc) par le deuxième signal auxiliaire (ps1) et le deuxième signal mélangé (ws) par le premier signal mélangé (pc1) - on prévoit alors des moyens de soustraction (39) qui soustraient les résultats de ces multiplications pour former un deuxième signal de sortie (A2) et

l'on prévoit des moyens de régulation de phase (49, 50, ..., 59, 37) qui commandent la position de phase des signaux auxiliaires (pc1, ps1) de telle manière que le premier signal de sortie (A1) correspond au signal de données radio (RDS) réduit dans la bande de base.

2. Arrangement de circuit selon la revendication 1, **caractérisé en ce que**

le porteur de référence a pour séquence de nombres 0, 1, 0, -1, ... en cas de position de phase sinusoïdale et pour séquence de nombres 1, 0, - 1, 0 en cas de position de phase cosinusoïdale.

3. Arrangement de circuit selon l'une des revendications 1 ou 2,

**caractérisé en ce que**

le deuxième signal de sortie (A2) forme un signal de radioguidage routier dans la bande de base.

4. Arrangement de circuit selon l'une des revendications 1 ou 2,

**caractérisé en ce que**

pour régler la position de phase des signaux auxiliaires (pc1, ps1) le premier, le deuxième et un troisième signal de sortie (A3), obtenu en multipliant le premier signal de sortie par le deuxième (A1, A2). sont chacun conduits par l'intermédiaire d'un filtre passe-bas (53, 54, 55), l'on prévoit des moyens de multiplication (48) qui multiplient l'un par l'autre le premier et le deuxième signal de sortie (H1, H2) soumis à une filtration passe-bas et l'on prévoit en outre des moyens de soustraction (58) qui soustraient le résultat de cette multiplication du troisième signal de sortie (H3) soumis à une filtration passe-bas et l'on prévoit un circuit de valeur seuil (59) qui, à partir du résultat (59) de la soustraction, forme une tension de commande pour le générateur qui produit les signaux auxiliaires (pc1, ps1).

5. Arrangement de circuit selon la revendication 3, **caractérisé en ce que**

l'on prévoit des moyens de multiplication (57) dans lesquels le résultat de la multiplication du premier et du deuxième signal de sortie (H1, H2), respectivement conduits par l'intermédiaire d'un filtre passe-bas (53, 55), sont multipliés par une constante (n) avant de former la différence.

6. Arrangement de circuit selon l'une des revendications précédentes comportant des moyens de génération (37) pour produire au moins un signal périodique d'une forme de courbe donnée en fonction d'un signal de commande (us) acheminé qui peut prendre deux niveaux lesquels sont **caractérisés en ce que**

l'on prévoit un registre qui est conçu de telle sorte que le contenu du registre (62) est incrémenté ou décrémenté, en fonction du niveau du signal de commande, par des impulsions de cadence dont la fréquence est significativement plus élevée que la fréquence du signal produit, l'on prévoit un circuit (65) qui calcule une valeur de fonction à partir de chaque contenu du registre (62), la gamme de valeurs que peut prendre le contenu du registre (62) correspondant à une demi période du signal à produire, et l'on prévoit des moyens (64, 66, 67) qui provoquent un changement du signe des valeurs de fonctionnement calculées lorsque le registre (62) est dépassé positivement ou négativement.

7. Arrangement de circuit selon la revendication 6, **caractérisé en ce que**

la forme de courbe donnée est sinusoïdale, l'on prévoit des moyens (65) pour produire un autre signal cosinusoïdal, les valeurs de fonctionnement étant calculées par des polynômes.

8. Arrangement de circuit selon l'une des revendications précédentes,

**caractérisé en ce que**

l'on prévoit des moyens (113, 110) qui additionnent respectivement pour la durée d'une période du signal RDS les valeurs de balayage du signal de données radio (RDS) diminué dans la bande de base et d'un des signaux mélangés, l'on prévoit des moyens de formation de valeur absolue (114, 115) qui forment la valeur absolue à partir des valeurs de balayage additionnées et l'on prévoit, pour former un signal (D1) qui sert à commander une correction de phase de 180°, des moyens de soustraction (117) destinés à former la différence des valeurs absolues à un instant donné.

9. Arrangement de circuit selon la revendication 8, **caractérisé en ce que**

l'on peut utiliser les valeurs de balayage additionnées du signal mélangé pour obtenir le signal de données radio démodulé.

10. Arrangement de circuit selon la revendication 8,

**caractérisé en ce que**

l'on réalise une détection d'une erreur de 180° à l'aide d'un intégrateur dont la direction de comptage est déterminée par la différence des valeurs absolues et qui provoque une correction de phase de 180° en cas de dépassement positif.

Fig. 1

EP 0 627 834 B1

Fig. 2

Fig. 3

Fig. 4

Fig. 5

$$ps0(X) = 0,7846128 \cdot X - 0,3214652 \cdot X^3 + 0,0363513 \cdot X^5$$

$$pc0(X) = 0,4995 = 0,6122662 \, X^2 + 0,1126687 \cdot X^4$$

EP 0 627 834 B1

Fig. 6

Fig. 7

EP 0 627 834 B1

Fig. 8